**Europäisches Patentamt**

**European Patent Office**

**Office européen des brevets**

(11) Veröffentlichungsnummer: **0 628 014 B1**

(12) **EUROPÄISCHE PATENTSCHRIFT**

(45) Veröffentlichungstag der Patentschrift: **13.12.95**

(51) Int. Cl.⁶: **B66B 13/14**, E05F 15/14

(21) Anmeldenummer: **93903165.4**

(22) Anmeldetag: **11.02.93**

(86) Internationale Anmeldenummer:
**PCT/DE93/00120**

(87) Internationale Veröffentlichungsnummer:
**WO 93/16948 (02.09.93 93/21)**

(54) **EINRICHTUNG FÜR DIE ÜBERWACHUNG DER KINETISCHEN ENERGIE EINER SCHIEBETÜR**

(30) Priorität: **28.02.92 DE 9202631 U**

(43) Veröffentlichungstag der Anmeldung:
**14.12.94 Patentblatt 94/50**

(45) Bekanntmachung des Hinweises auf die
Patenterteilung:
**13.12.95 Patentblatt 95/50**

(84) Benannte Vertragsstaaten:
**AT BE CH DE DK ES FR GB IT LI LU NL SE**

(56) Entgegenhaltungen:
**EP-A- 0 157 582**
**EP-A- 0 502 773**

**BROWN BOVERI REVIEW Bd. 73, Nr. 7, Juli
1986, BADEN CH Seiten 339 - 402 SCHOL-
TYSSEK ET AL. 'digital torque computer for
test rig drives with dc motors'**

(73) Patentinhaber: **SIEMENS AKTIENGESELL-
SCHAFT
Wittelsbacherplatz 2
D-80333 München (DE)**

(72) Erfinder: **LUDWIG, Heinz
Auf der Horst 40A
D-3008 Garbsen 1 (DE)**
Erfinder: **SONNTAG, Guido
Am Dorfbrunnen 7A
D-3007 Gehrden 4 (DE)**

## Beschreibung

Die Erfindung betrifft eine Einrichtung für die Überwachung der kinetischen Energie einer Schiebetür, mit einem von einem Netzteil gespeisten Antriebsmotor mit digitalem Impulsgeber, einer Impulsauswerteeinheit und mit einem zum Verarbeiten der Signale der Impulsauswerteeinrichtung eingerichteten Prozessorsystem zur Türstellungsermittlung.

Bei motorisch betriebenen Schiebetüren, und zwar sowohl bei einfachen Schiebetüren als auch bei Aufzugstüren, steigt durch die allgemeine bautechnische Entwicklung sowohl das Türgewicht als auch die Türgeschwindigkeit. Hierdurch steigt auch das Gefährdenspotential der Schiebetür. Um dieses zu begrenzen, ist zumindest für besonders große und schwere, aber auch für besonders schnelle, Schiebetüren eine Überwachung der kinetischen Energie erforderlich.

Es ist Aufgabe der Erfindung, eine kostengünstige, einfache Schaltung anzugeben, die die kinetische Energie einer Schiebetür innerhalb der zulässigen Grenzen halt und ohne individuelle Justierung auskommt. Dabei soll sie eine maximale Türgeschwindigkeit erlauben.

Die Aufgabe wird dadurch gelöst, daß die Einrichtung ein Motorstrom-Erfassungsglied, insbesondere verbunden mit einem Analog-/Digitalwandler, und einen Controller zur Ermittlung der aufgewandten Kraft und daraus der kinetischen Energie der Schiebetür aufweist. Mit Hilfe eines derartigen Prozessorsystems, das vorzugsweise als Speicher ein EE-PROM aufweist, kann mit dem Fachmann bekannten Beziehungen die Berechnung der kinetischen Energie automatisch durchgeführt werden.

Aus der EP 0 157 582 A3 ist eine Einrichtung zur Ermittlung der kinetischen Energie einer Schiebetür bekannt, bei der mit Hilfe von zwei Detektoren an der Schiebetür die auf der Strecke zwischen den beiden Detektoren erreichte Geschwindigkeit der Schiebetür ermittelt und daraus die kinetische Energie zur Bestimmung der Beschleunigung, Abbremsung oder zum Stop der Tür ermittelt wird. Diese Einrichtung ist unflexibel und relativ aufwendig, da sie mit gesonderten, störungsanfälligen Sensoren arbeitet und ermöglicht nicht die Begrenzung der kinetischen Energie der Schiebetür, die sicherheitstechnisch erwünscht ist.

Um erfindungsgemäß die notwendigen Angaben für den Controller zu erhalten, weist die Einrichtung ein Motorstrom-Erfassungsglied, insbesondere mit einem Analog/Digitalwandler auf. Das Motorstrom- Erfassungsglied ist in der Leitung von einem Netzteil zum Motor angeordnet und gibt dem Controller den jeweiligen Motorstrom in digitaler Form an. Der Controller wirkt auf einen mit dem Controller verbundenen Motorstrombegrenzer, insbesondere in Form einer steuerbaren Endstufe, der ebenfalls in der Leitung vom Netzteil zum Motor angeordnet ist. Über die Endstufe wirkt der Controller derart auf den Motorstrom, daß die kinetische Energie der vom Motor angetriebenen Tür erfindungsgemäß begrenzt wird.

Für die Übermittlung der Daten, die dem Controller für seine Rechnungen zur Verfügung gestellt werden, sind die Impulsauswerteeinrichtung, das Motorstrom-Erfassungsglied und das Netzteil über elektrische Verbindungen mit dem Controller verbunden.

Die Erfindung wird anhand einer Zeichnung näher erläutert, aus der, ebenso wie aus den Ansprüchen, weitere Einzelheiten entnehmbar sind.

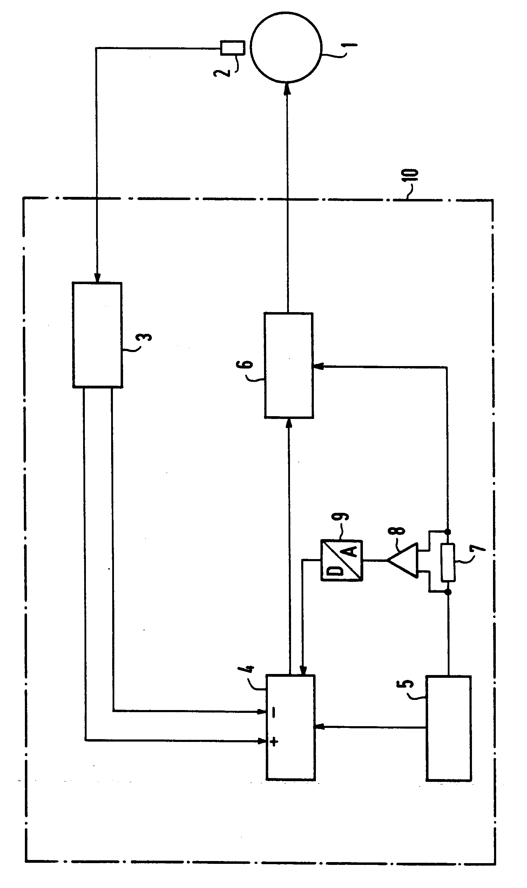

Die Zeichnung zeigt das Schaltbild der Überwachungseinrichtung in Verbindung mit dem Motor und dem Impulsgeber.

In der Zeichnung bezeichnet 1 den Türantriebsmotor mit dem digitalen Impulsgeber 2. Digitale Impulsgeber sind bekannt. Der Impulsgeber 2 ist elektrisch mit einer Impulsauswerteeinrichtung 3 verbunden, in der such die Bewegungsrichtung der Schiebetür detektiert wird. Zur Kennzeichnung der unterschiedlichen Signale bei dem Öffnungs- und dem Schließvorgang sind zwei Eingänge in den Controller 4 gezeigt und mit plus und minus bezeichnet.

Die Stromversorgung des Motors 1 erfolgt über die steuerbare Endstufe 6, die durch eine elektrische Verbindung mit dem Controller 4 verbunden ist. Die Endstufe 6 ist durch eine Leitung mit dem Netzteil 5 verbunden. In dieser Leitung ist ein Meßwiderstand 7 angeordnet, der über einen Verstärker 8 und den Analog/Digitalwandler 9 ein Signal des Strom-Istwerts für den Controller 4 liefert.

Das Netzteil 5, der Meßwiderstand 7 mit seinen Komponenten 8 und 9 sowie die steuerbare Endstufe 6, die Impulsauswerteeinrichtung 3 sowie der Controller 4 mit dem nichtflüchtigen Speicher sind vorteilhaft auf einer Platine 10 angeordnet, die sich vorzugsweise in einem Gehäuse an der Schiebetür befindet. Zusammen mit dem Impulsgeber 2 am Motor 1 bildet die Überwachungseinrichtung eine technische Einheit, mit der die kinetische Energie einer Schiebetür ermittelt und/oder begrenzt werden kann.

Die kinetische Energie der Tür wird aus der bekannten Beziehung

$$E_{kin} = m \times \frac{v^2}{2}$$

berechnet. In der Gleichung bezeichnet m die Masse der Tür und V ihre Geschwindigkeit. Die Geschwindigkeit und die Beschleunigung laßt sich aus den Impulsen vom Impulsgeber 2 über die Zeit und die Masse der Tür aus der Beziehung Kraft = Masse x Beschleunigung ermitteln. Die Kraft ist über das Motormoment bekannt und das Motormoment wiederum aus dem Motorstrom. So kann durch einfache Berechnungen die kinetische Energie der Tür ermittelt werden. Der Controller 4 ist zum Abarbeiten derartiger Rechnungen eingerichtet. Er kann aufgrund der Rechnungen, als Ist/Sollwertvergleicher wirkend, die Geschwindigkeit und damit die kinetische Energie der Tür begrenzen.

Die Türbewegung wird durch den mit einem digitalen Geber 2 versehenen Antriebsmotor 1 bewirkt, der über ein nicht gezeigtes, bekanntes Übertragungselement, z.B. einen Zahnriemen, die Tür bewegte Während der Türbewegung geben die Impulse des digitalen Impulsgebers 2 die Türstellung an.

Die gezeigte elektrische Schaltung ist nicht auf einen Controller nur für die Lösung der obengenannten Aufgabe beschränkt. Auch eine Realisierung mit einem, auch weitere Aufgaben (z.B. Geschwindigkeitsregelung) bearbeitenden, Controller ist möglich. Ebenso ist die Komponentenanordnung nicht unveränderbar, so wird z.B. bei Antrieben für Sicherheitstüren der Impulsgeber 2 vorteilhaft nicht am Motor 1, sondern an dem Gegenrad des Antriebszahnriemens der Tür angeordnet werden.

## Patentansprüche

1. Einrichtung für die Überwachung der kinetischen Energie einer Schiebetür, mit einem von einem Netzteil (5) gespeisten Antriebsmotor (1) mit digitalem Impulsgeber (2), einer Impulsauswerteinheit (3) und mit einem zum Verarbeiten der Signale der Impulsauswerteinrichtung (3) eingerichteten Prozessorsystem zur Türstellungsermittlung,
**dadurch gekennzeichnet**,
daß sie ein Motorstrom-Erfassungsglied (7,8), insbesondere verbunden mit einem Analog-/Digitalwandler (9), und einen Controller (4) zur Ermittlung der aufgewandten Kraft und daraus der kinetischen Energie der Schiebetür aufweist.

2. Einrichtung nach Anspruch 1,
**dadurch gekennzeichnet**,
daß das Motorstrom-Erfassungsglied (7,8) in einer Leitung von einem Netzteil (5) zum Motor (1) angeordnet ist.

3. Einrichtung nach Anspruch 1 oder 2,
**dadurch gekennzeichnet**,
daß sie einen mit dem Controller (4) verbundenen Motorstrombegrenzer (6), insbesondere in Form einer steuerbaren Endstufe, aufweist, die als Türgeschwindigkeits-Steuerglied wirkend, in der Leitung vom Netzteil (5) zum Motor (1) angeordnet ist.

4. Einrichtung nach Anspruch 1,2 oder 3,
**dadurch gekennzeichnet**,
daß die Impulsauswerteeinrichtung (3), das Motorstromerfassungsglied (7,8) und das Netzteil (5) über elektrische Verbindungen mit dem Controller (4) verbunden sind.

5. Einrichtung nach einem oder mehreren der vorhergehenden Ansprüche, **dadurch gekennzeichnet**,
daß sie einen Controller (4) aufweist, der zum Abarbeiten eines Programms zur Begrenzung der kinetischen Energie einer Schiebetür, insbesondere einer Aufzugstür, eingerichtet ist.

## Claims

1. A device for monitoring the kinetic energy of a sliding door, comprising a drive motor (1) supplied by a mains element (5) with a digital pulse transmitter (2), a pulse evaluating unit (3) and a processor system adapted for processing the signals from the pulse evaluating unit (3) for determining the position of the door, characterised in that the device comprises a motor current detection member (7, 8), more particularly connected to an analogue/digital converter (9), and a controller (4) for determining the power used and from this the kinetic energy of the sliding door.

2. A device according to claim 1, characterised in that the motor current detection member (7, 8) is arranged in a line leading from a mains element (5) to the motor (1).

3. A device according to claim 1 or 2, characterised in that it comprises a motor current limiter (6) connected to the controller (4), more particularly in the form of a controllable end stage, which acts as a door velocity control member and is arranged in the line leading from the mains element (5) to the motor (1).

4. A device according to claim 1, 2 or 3, characterised in that the pulse evaluating device (3), the motor current detection member (7, 8) and the mains element (5) are connected to the controller (4) via electrical connections.

5. A device according to one or more of the preceding claims, characterised in that it comprises a controller (4), which is adapted for producing a program for limiting the kinetic energy of a sliding door, more particularly a lift door.

**Revendications**

1. Dispositif pour contrôler l'énergie cinétique d'une porte coulissante, comportant un moteur (1) d'entraînement alimenté par une alimentation (5) électrique et muni d'un générateur (2) d'impulsions numériques, une unité (3) d'exploitation des impulsions, et un système à processeur agencé de manière à traiter les signaux du dispositif (3) d'exploitation des impulsions, afin de déterminer la position de la porte, caractérisé par le fait qu'il comporte un organe (7,8) de détection du courant du moteur, relié notamment à un convertisseur (9) analogique/numérique, et un dispositif (4) de commande servant à déterminer la force appliquée et, à partir de là, l'énergie cinétique de la porte coulissante.

2. Dispositif suivant la revendication 1, caractérisé par le fait que l'organe (7,8) de détection du courant du moteur est disposé dans une ligne reliant l'alimentation (5) électrique au moteur (1).

3. Dispositif suivant la revendication 1 ou 2, caractérisé par le fait qu'il comporte un limiteur (6) du courant du moteur, qui est relié au dispositif (4) de commande, notamment sous la forme d'un étage final pouvant être commandé, qui est disposé, de manière à agir en tant qu'organe de commande de la vitesse de la porte, dans la ligne reliant l'alimentation (5) électrique au moteur (1).

4. Dispositif suivant la revendication 1, 2 ou 3, caractérisé par le fait que le dispositif (3) d'exploitation des impulsions, l'organe (7,8) de détection du courant du moteur et l'alimentation (5) électrique sont reliés au dispositif (4) de commande par l'intermédiaire de liaisons électriques.

5. Dispositif suivant une ou plusieurs des revendications précédentes, caractérisé par le fait qu'il comporte un dispositif (4) de commande, qui est agencé de manière à traiter un programme de limitation de l'énergie cinétique d'une porte coulissante, notamment d'une porte d'ascenseur.